# EUROPEAN PATENT SPECIFICATION

(11) **EP 3 523 525 B1**
(45) Date of publication and mention of the grant of the patent: **02.12.2020**
(21) Application number: 17788275.0
(22) Date of filing: 19.09.2017
(51) Int. Cl.: F02B 33/44, F02B 75/02, F02B 19/08, F02B 19/14

(54) **SPARK IGNITED INTERNAL COMBUSTION ENGINE**
FREMDGEZÜNDETER VERBRENNUNGSMOTOR
MOTEUR À COMBUSTION INTERNE À ALLUMAGE PAR ÉTINCELLES

(30) Priority: 04.10.2016 GB 201616876; 09.11.2016 GB 201618891; 23.08.2017 GB 201713507
(43) Date of publication of application: 14.08.2019
(73) Proprietor: Motodan Limited, Coventry, Warwickshire CV3 6FY (GB)
(72) Inventor: MERRITT, Dan, Coventry Warwickshire CV3 6FY (GB)
(74) Representative: Blower, Timothy John
(86) International application number: PCT/GB2017/052784
(87) International publication number: WO 2018/065751

(56) References cited:
- GB-A- 941 220
- GB-A- 2 450 616
- US-A1- 2007 051 338
- US-A1- 2013 104 542

## Description

### Field of the Invention

The present invention relates to a spark ignited internal combustion engine.

### Background of the Invention

This invention is an improvement of the Merritt Engine combustion system described in international patent publications WO2005/0523355 and WO/2007/080366, which can be applied to either a four stroke or a two stroke engine cycle. The invention combines the Merritt engine combustion system with a mixed assembly of interdependent cylinders in one engine, some operating on the two stroke cycle and others operating on the four stroke cycle. The cylinders are capable of sharing the same crankcase, the same crankshaft and the same camshaft. Two stroke cylinders are used in order to reduce the mechanical friction and increase the power density of the engine. All cylinders use the highly efficient Merritt combustion system. The main characteristic of the Merritt Engine is the use of a combustion chamber, shaped like a vortex tube, which is separated from the cylinder in order to allow better control over gas movement within it. Such construction enabled a completely new combustion management system different from either diesel or Otto (the conventional petrol engine). By avoiding burning fuel above the piston, where control over gas movement is very limited, the Merritt Engine achieved stratification over the complete range of operation whilst operating on the Otto engine cycle and using spark ignition, so eliminating the need for a throttle valve. It uses volatile fuels such as gasoline and alcohols which burn in the presence of air in excess of the quantity needed to provide Oxygen for complete combustion. The Merritt Engine achieved a substantial increase of thermal efficiency leading to reduced Carbon dioxide emissions from the engine's exhaust. The high thermal efficiency results from the ability to greatly reduce heat loss from the burning gas flame by radiation because rapid mixing of flaming gases with excess air reduces temperature and radiation. Burning with excess air gives the diesel engine its efficiency advantage over Otto since Otto does not allow excess air at any operational condition. If x grams of air are needed to burn y grams of fuel without leaving free Oxygen in the exhaust, an engine which has 2x grams of air whilst burning y grams of fuel is said to operate with 100% excess air.

The Merritt Engine is intended for use in automotive applications and therefore it needs to meet prescribed exhaust emission limits and be capable of reliable starts and idling.

When operating at part load with more than 100% excess air the Merritt Engine can avoid the formation of harmful Nitrogen Oxides which both diesel and conventional petrol engine have found difficult to deal with.

The only remaining efficiency improvement which the Merritt Engine can have is a large reduction of mechanical friction. This is the purpose of the current invention. Such reduction is particularly beneficial at part load where friction losses begin to affect efficiency adversely. The best way of achieving such reduction of friction is to operate the engine on the two stroke breathing cycle. The current invention improves the Merritt Engine's thermal efficiency further towards the limit imposed by the Second Law of thermodynamics. The combination of low friction with excess air and very fast combustion can raise the efficiency of the engine according to this invention to almost twice the efficiency of existing Otto engines when averaged over a typical urban journey, offering a major contribution to the alleviation of global warming.

### Summary of the Invention

The invention offers many advantages to the internal combustion spark engine. These are achieved by the combination of two stroke and four stroke cylinders in one engine cylinder assembly where all cylinders also use the Merritt Engine combustion management system. These advantages can be summarised as follows;
1. Unthrottled operation leading to large reduction, possibly halving, of CO2 emissions from petrol cars over urban journeys. This offers a contribution to meet global warming targets.
2. Further increase of efficiency by reducing friction from the cylinders which operate on the two stroke cycle.
3. Rearranging efficiency distribution .Placing highest efficiency at the lower end of power output. (In direct contrast to what Otto engines do).
4. Increase power density of engine assembly by operating some cylinders on the two stroke cycle.
5. Using increased power density as an option to operate the engine with enough excess air so as to remain below the NOx emission threshold, and to do so whilst retaining the power density of typical four stroke engines of the same size.
6. When opting to operate with excess air to ensure complete combustion and consequently ensure no harmful exhaust emissions other than CO2 without the need for exhaust after treatment.
7. To retain conventional lubrication for crankshaft and pistons even for two stroke cylinders and also to retain a similar engine construction and size typical of the four stroke engines used in similar cars.

In order to introduce cylinders operating on the two stroke breathing cycle into a crankcase containing a four stroke cylinder it is necessary to avoid the complicated construction of the crankcase of multi cylinder two stroke engines which uses the crankcase as an air pump and requires oil mist lubrication which causes exhaust pollution. The preferred construction of the two stroke cylinders in the Merritt Engine according to the current invention is to use a turbocharger to deliver air into such cylinders and also the use of the uniflow scavenge method which requires an exhaust valve in the cylinder head.

Car engines undergo frequent starts and idle operations when two stroke cylinders produce insufficient exhaust gas energy to drive the turbocharger. To overcome this disadvantage an engine according to this invention includes at least one cylinder which operates on a four stroke cycle and at least one cylinder which operates on a two stroke cycle. Preferably all cylinders, both two stroke and four stroke, share the same crankcase, the same crankshaft, the same camshaft and the same turbocharger and their physical shape such as bore, stroke and valve size is preferably made as near identical as possible. The unthrottled operation ensures that the quantity of gas flowing through the entire engine's cylinders remains nearly constant enabling the efficient operation of the turbocharger to be extended into lower power outputs. Even so two stroke cylinders alone will not produce enough exhaust energy to allow engine starts or even engine idle. The four stroke cylinder which does not depend on the turbocharger for its air intake can start unaided and idle unaided and so provide the turbocharger with reliable exhaust gas energy until the two stroke cylinders are able to take over.

By using a turbocharger to pump air, this invention allows the two stroke cylinders to use the lubrication system which is typically used with four stroke engines. Indeed it is possible to convert a typical four stroke car engine crankcase to an engine according to this invention whilst retaining the same crankcase assembly, the only modification needed is the provision of inlet ports in the cylinders which operate as two strokes.

By operating the Merritt Engine as a two stroke in the same crankcase of a typical four stroke engine the power density of such an engine can be increased sufficiently to allow the engine to always operate with excess air in the range of 100% (approximately half maximum MEP) and above, up to 800% excess(when idling). Such construction is attractive because it not only takes care of NOx emission without exhaust after treatment, it can also promote complete combustion at the engine's highest efficiency levels estimated to reach over 40%. Such an engine is now needed to reduce or even eliminate harmful urban pollutions from cars.

The present invention seeks to provide a modified internal combustion engine, improved methods of operating same and motor vehicles fitted with such an engine.

Accordingly, this invention provides a spark ignited internal combustion engine as defined in claim 1 of the claims.

Other features of the invention are as defined in the dependent claims.

In the present invention, all of the cylinders operating as two strokes use what is known by those skilled in the art as the uniflow scavenge system.

The term turbocharger is used to describe a device, usually used with engines, which uses exhaust gas energy supplied by the engine to drive a rotary turbine which then drives an impeller designed to take in ambient air and increase its pressure before delivering it to the engine air intake.

Both the two stroke cylinders and four stroke cylinders communicate with the same turbocharger for mutual benefit. By operating together with two stroke cylinders the four stroke cylinder reduces the overall mechanical friction and increases the power density of the cylinder assembly compared with a similarly sized engine comprising only four stroke cylinders. By operating with a four stroke cylinder, the two stroke cylinder benefits from a reliable turbocharger operation when starting or idling or when operating at low power outputs. A most important benefit for the two stroke cylinder is to use the same lubrication system as a four stroke cylinder.

The degree of communication between the various cylinders and the turbocharger can be chosen to provide the necessary energy balance and will depend on the number of cylinders of each type used. For example the inlet valve of a cylinder operating on the four stroke cycle can be connected to the compressor impeller if enough energy is available for pressure charging for it. To increase the advantage of an engine according to this invention the number of two stroke cylinders should be maximised and the number of four stroke cylinders should be minimised although a minimum of one is essential. The four stroke cylinders and two stroke cylinders can preferably have the same bore and stroke, share the same crankcase, the same crankshaft and also the same camshaft.

In order to increase the energy delivered to the turbine at least one cylinder can be programmed to increase the exhaust gas energy it delivers to the turbocharger turbine by increasing the amount of fuel burnt therein or by advancing the timing of opening of the exhaust valve of this cylinder or by a combination of both methods;

### Definitions

2S or 4S cylinders will be used to identify two stroke or four stroke cylinders.

Otto engine describes conventional throttled spark ignited reciprocating engines.

The following terms are often used by people skilled in the art but will be defined here to ensure a clear understanding of the description which follows;

The term scavenging stands for a process where fresh incoming air without fuel enters the 2S cylinder through the inlet ports and displaces the residual gas forcing it to leave the cylinder through the exhaust valve. A complete scavenge replaces all residual gas and an incomplete scavenge replaces only a proportion of residual gas.

The term uniflow scavenge describes a scavenge process which admits fresh air through inlet ports around and above the piston crown, when at the end of the expansion stroke position and allows residual gases to escape through an exhaust valve situated in the cylinder head at the opposite end of the cylinder.

The term pressure charging stands for a scavenging process which ends when the cylinder pressure reaches above atmospheric value at the moment when the exhaust valve is closed.

The term Blow Down is used to describe the escape of pressurised residual gas from both 2S and 4S cylinders soon after the exhaust valve opens during the latter part of the expansion stroke.

### MEP stands for indicated mean effective pressure

The term VVT describes variable valve timing a device which allows the time and/or the duration of opening a valve to be varied whilst the engine is operating.

The term "gas producing cylinder" or "gas generating cylinder" will be used to describe any cylinder, either 2S or 4S, which is operated such that the amount of fuel burnt in combination with a relatively earlier timing of exhaust valve opening provides the turbine with an increased amount of energy to enable an appropriate scavenge, even if this is done at the expense of reduced amounts of work energy output from the said cylinder.

The term NOx Threshold describes the MEP at which the Merritt Engine begins to produce Nitrogen Oxide gases in its exhaust above the level permitted by emission regulations. In typical Merritt Engines this happens at the higher end of MEP for example above 6 bars.

The term Excess Air describes air within a gaseous mixture of fuel and air which contains more Oxygen than is needed to completely burn the fuel contained in the mixture into CO2 and steam. Excess air is available in unthrottled engines such as diesel and Merritt Engines when operating below maximum MEP.

### Purpose of the invention.

1. To enable unthrottled operation leading to large reduction, possibly halving, of CO2 emissions from petrol cars over urban journeys as a contribution to meet global warming targets.
2. To achieve even higher brake thermal efficiency by reducing friction from 2S cylinders.
3. To position the highest efficiency range at the lower end of MEP used by cars on most urban journeys, so reversing Otto engine behaviour.
4. To increase power density of engine assembly by operating some cylinders as 2S cylinders.
5. To offer an option to use such increased power density to operate the engine with excess air to remain below the NOx Threshold, with similar power density to that of a 4S Otto engine of the same size and without the need for after treatment.
6. To ensure complete combustion when opting to operate with excess air and consequently ensure no harmful exhaust emissions other than CO2.
7. To retain the conventional lubrication for crankshaft and pistons used with typical 4S Otto engines and also retain a similar engine construction and size typical of 4S Otto engines.

### Description of the invention.

For a 2S cylinder, most of the energy needed to drive a turbocharger is only available during the Blow Down process which takes place when the exhaust valve opens at the end of the expansion stroke. In contrast a 4S cylinder uses the piston to force all the post combustion gases out of the cylinder even after the Blow Down process is completed. If the turbocharger only relied on 2S cylinders to drive it there may not be enough energy in the exhaust gases for a complete uniflow scavenging process at low MEP operations.

The current invention enables a Merritt Engine when fitted to a vehicle to operate with both 2S and 4S cylinders driving the same crankshaft and using the same camshaft. It enables the 4S cylinders to ensure reliable scavenge operations for 2S cylinders during periods of operation when the 2S cylinders would not have been able to drive the turbine with sufficient exhaust gas energy on their own. Preferably, to confer the largest advantage, the number of 2S cylinders in a given crankcase should be maximised, for example three such cylinders may be used in a 4S engine. 2S cylinders effectively halve mechanical friction losses per working stroke and also increase the power density of an engine by 'firing' every crankshaft revolution.

4S cylinders will be needed to cope with frequent starting and idling conditions experienced by vehicle engines. 4S cylinder incorporated into the Merritt Engine takes care of its own induction and exhaust breathing processes. All cylinders in the Merritt Engine can operate unthrottled at part load allowing as much air as possible to flow through the turbine connected to the exhaust of its cylinders. The energy supply to the turbine is also increased by the work energy delivered by the 4S piston during its exhaust stroke.

The engine according to this invention must have at least one of its cylinders operating as a 4S but the number depends on the energy balance related to the total number of cylinders used in the engine. For example an eight cylinder engine may require two. To help avoid using more than one cylinder as a 4S, the engine according to this invention can provide extra exhaust gas energy from any of the cylinders either 4S or 2S. This is achievable in gas producing cylinders by opening their exhaust valve prematurely and/or or by increasing the amount of fuel delivered to such cylinders.

All cylinders in the engine according to this invention must have at least one exhaust valve each. The 2S cylinders will be using it during the uniflow scavenge system together with the inlet ports situated near the lower end of the cylinder. The 4S cylinder must also have an inlet valve situated in its cylinder head.

The gas producing cylinder can benefit from the use of variable valve timing or VVT which enables it to change the opening time of the exhaust valve to suit engine speed. Alternatively other valve actuation mechanisms can be used to advantage. The engine controller needs to be able to control the amount of fuel delivered to the fuel injector serving each gas producing cylinder and each 4S cylinder independently of fuel injectors serving other 2S cylinders.

The exhaust gas from both types of cylinders can be delivered to a single turbine but care may be needed to avoid harmful interference of exhaust gas pulses delivered by cylinders. A valve such as a reed valve or a rotary distributor valve can be used to avoid reverse flow of exhaust gases from one cylinder to another.

Preferably a 4S cylinder will be identical in size with all other cylinders and use identical or similar combustion chamber geometry as all other cylinders in the engine but a 4S cylinder will use two breathing valves, an inlet valve and an exhaust valve. If a cam shaft is used to actuate valves the single exhaust valves of the 2S cylinders and the two valves of the 4S cylinder can be actuated by the same cam shaft operating at half engine speed and the cam lobes for the 2S cylinders will provide two valve openings per one revolution of the camshaft, 180 degrees apart. A 4S cylinder which has two valves may need to use rockers.

The timing and quantity of fuel supply to the 4S and to the gas producing cylinders can differ from the fuel supply delivered to the other cylinders and the engine controller will need to be programmed accordingly.

The Merritt Engine can operate satisfactorily at part load even when the scavenge process is incomplete and when some residual gases remain in the combustion chamber at the time of spark ignition. This allows another degree of flexibility to the engine's operation.

The amount of unused Oxygen remaining in re-circulated residual gases can be substantial when the engine operates at low fuelling rates at low MEP.

Because the Merritt Engine can operate unthrottled, the same amount of scavenge air per engine cycle will be needed irrespective of the amount of fuel used.

Because all fuel is delivered into and burnt in the combustion chamber, which is situated outside the cylinder, no fuel will be lost if some of the scavenge air escapes through the open exhaust valve.

Alcohols such as Ethanol are particularly suitable for use as a fuel in the Merritt system either alone or mixed with gasoline because it is injected into a jet of hot air during the compression stroke and does not wet the inside of the engine cylinder.

The 4S cylinder does not require assistance to inhale its own air and can be used to start the engine and idle the engine when the 2S cylinders are denied fuel. As the engine speed increases the 2S cylinders will be provided with fuel until a speed and MEP are reached when the turbocharger can provide effective scavenge without using gas producing cylinders.

The exhaust valve must open before the piston starts uncovering the inlet ports as it approaches the end of its expansion stroke position so the effective length of the expansion stroke is shortened compared with the geometric expansion stroke which is twice the crank shaft radius. However the last portion of the expansion stroke produces much less work than the first portion. The blow-down process also takes advantage of what can be called the Atkinson energy which usually goes to waste in un-turbocharged engines. It is the energy possessed by the blow down gases when they expand to atmospheric pressure after escaping from the cylinder, since expansion stroke length of reciprocating engines are not long enough to expand gases down to atmospheric pressure. Extracting some of this energy by using a turbocharger increases the efficiency of the engine. At higher MEP values the blow down energy can reach a level which is sufficient to promote pressure charging for at least the 4S cylinder and even 2S cylinders if suitable VVT provision are made.

At higher MEP, when producing excessive NOx in the exhaust, the Merritt Engine reverts to stoichiometric burn operation in order to remove all free Oxygen from its exhaust to enable a catalytic converter to remove the offending NOx. This is done by partial throttling at higher MEP as described in international patent publication No: WO2017/085440A1 which describes another invention concerning the Merritt Engine.

### Brief description of the drawings

The invention is further described herein by four accompanying schematic diagrams. These are not drawn to scale and are presented for illustrative purposes only.
Figure-1 is a diagrammatic view of one typical 2S cylinder (102) comprising part of a multi cylinder engine according to this invention which uses a turbocharger (106) to deliver scavenge air to the cylinder.

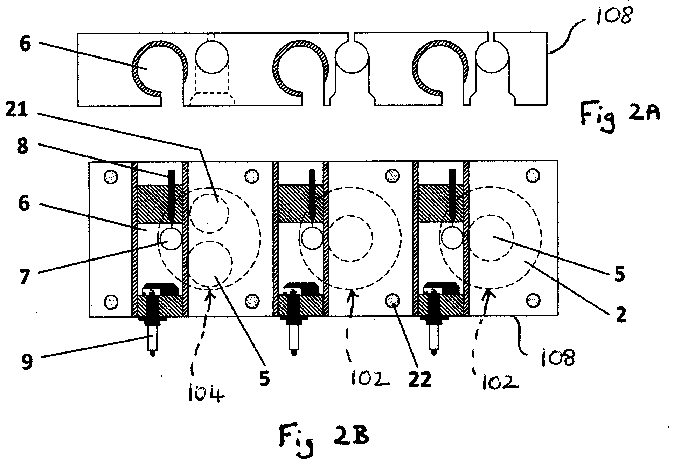

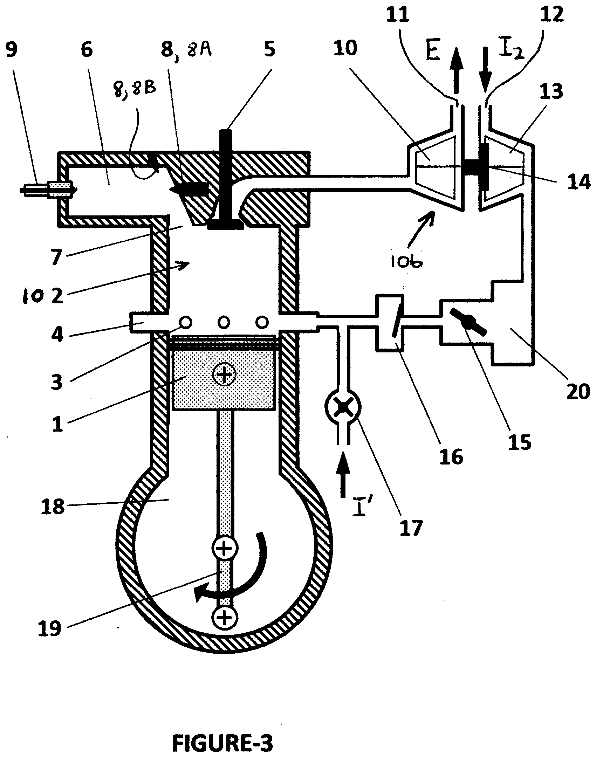

Figs. 2A and 2B are diagrammatic views at 90° to each other of a possible design for a cylinder head of a three cylinder Merritt Engine according to this invention in which one of the three cylinders is operating on a 4S cycle and the other two are operating on the 2S cycle. In one typical example, the views of Fig. 3 show a side elevation located above a plan view.
Figure-3 is similar to Figure-1 but also shows a range of additional devices which may be used to assist the scavenging of a 2S cylinder depending on the engine's specifications.
Figure-4 is a diagram showing the gas interchanges between the turbocharger and the 2S and 4S cylinders of Figure-2.

It is important to point out that all previously known Merritt engines differ from conventional Otto engines only by having a different cylinder head and combustion chamber construction. However, this invention also requires the provision of inlet ports 3 in the crankcase at the lower end of all 2S cylinders.

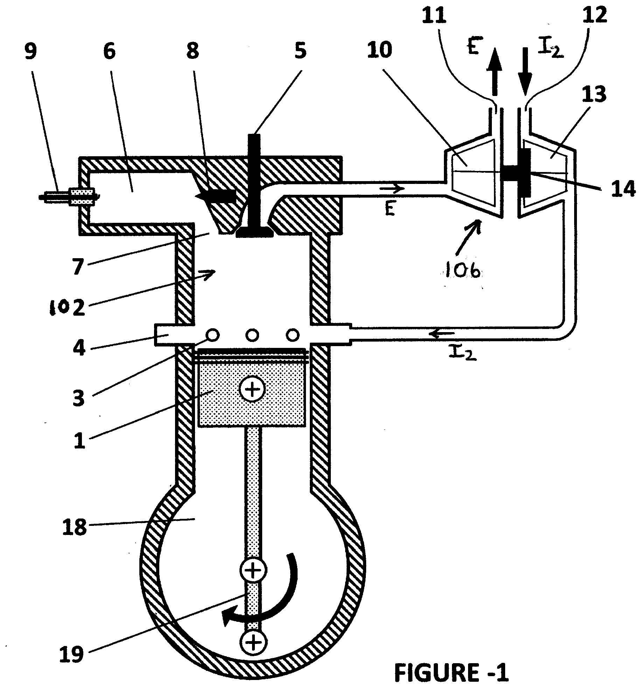

In the engine of the invention, as shown in Figs. 1 to 4, the engine comprises a combination of several cylinders in which at least one cylinder (102) is programmed to operate on the two stroke cycle and at least one cylinder is programmed to operate on the four stroke cycle;
a cylinder head to close each and all cylinders at one end;
exhaust valve means (5) situated in the cylinder heads above all cylinders, four strokes and two strokes, leading to an exhaust duct or exhaust manifold;
a piston (1) located in each cylinder for reciprocating movements therein;
air inlet ports for the two stroke cylinders, which permit air inflow into the cylinders when the respective piston reaches the end of its expansion stroke;
air inlet valve for four stroke cylinders situated in the cylinder head and communicating with such cylinders;
a device to activate all valves situated in the cylinder heads of all cylinders such as a cam shaft or a rotary valve;
a turbocharger whose compressor impeller (13) communicates with air inlet means;
a combustion chamber (6) within the cylinder head having a near end and a far end relative to the cylinder, said chamber being spaced from the cylinder (2) but communicating therewith at its near end;
a transfer orifice (7) communicating with the cylinder (2)and the combustion chamber (6) at its near end positioned to deliver a jet of air into the combustion chamber with a tangential velocity component during the compression stroke of the piston;
means to promote an axial velocity component, towards the far end, to swirling air motion generated within the combustion chamber;
a fuel injector (8) communicating with the combustion chamber (6) arranged to deliver liquid fuel spray into the combustion chamber;
at least one spark igniter (9) in the region of the far end of the combustion chamber;
a controller to control at least the fuel injection process, the ignition process and air intake and exhaust processes;
wherein at least one cylinder of the engine which operates on the four stroke cycle supplies exhaust gas to the turbocharger turbine impeller (10) whose compressor impeller (13) supplies air to the air inlet means of at least one two stroke cylinder of the same engine.

In Figure- 1, the piston (1) is shown at the end of the expansion stroke. The air inlet ports (3) are only provided for 2S cylinders and are situated at the lower end of the cylinder (102) and are fully exposed when the piston reaches its outermost position as shown. The inlet ports are shown connected together by circumferential manifold (4). In multi-cylinder engines all inlet manifolds are combined and connect with the outlet from the compressor 13. The crankshaft (19) uses conventional lubrication and plain bearings since the crankcase (18) is not used as an air pump. A single exhaust valve (5) is shown in the cylinder head adjacent to the transfer orifice (7) leading to the separate combustion chamber (6). The exhaust valve (5) should close very soon after or at the same time when inlet ports (3) are closed by the piston during the early part of the compression stroke.

The separate combustion chamber (6) contains the fuel injector (8), which in one example, is aimed in the direction of a spark igniter (9) such as a spark plug which is situated at the far end of the cylindrical chamber. The turbocharger unit 106 has a turbine impeller (10), connected by a shaft to the compressor impeller (13). The engine needs relatively low pressure air without fuel to arrive at ports (3) to effect uniflow scavenge and in engines designed for lower MEP, the impeller (13) may be designed as a fan to deliver moderate pressure rise instead of a centrifugal compressor impeller as this will require less energy from the turbine. In one example, the rotor shaft could be attached to a flywheel (14) to increase its rotational moment of inertia if and when this is required. The exhaust duct (11) could be connected to a catalytic converter, which is not shown, if the engine is intended to operate at higher MEP values beyond the NOx threshold. Air inlet to the compressor impeller is shown at (12) and the outlet from the compressor connects with all inlet ports of all 2S cylinders. The inlet to the turbine (10) is connected to all the exhaust valve exits of all the engine's cylinders both the 2S and 4S cylinders.

A cylinder operating on the 4S cycle in the same engine block is not shown but will be very similar to the arrangement shown in Figure-1, only the inlet ports 3 will be missing, they need not be drilled through into the cylinder. The crank radius and cylinder bores will preferably be the same for both types of cylinders. The combustion chamber (6) will be very similar, possibly slightly smaller in size for the 2S cylinders but preferably with the same geometry. The 4S cylinder will have an inlet valve 21 situated in the cylinder head beside the exhaust valve (5). The inlet valve of the 4S cylinder is not connected to the compressor (13) outlet to enable the maximum amount of air to be delivered to the 2S cylinders.

Other arrangements are possible allowing the 4S inlet to be supplied from the compressor, but if this is desired the need for exhaust energy enhancement with gas producing cylinders may increase. For example, the engine could comprise three cylinders, one cylinder being a 4S and the other cylinders being gas generating 2S which are provided with VVT cams.

In use, the engine is started using a starter motor and in a starting/idling condition, fuel is only supplied to the 4S cylinder to enable idle. A Merritt 4S Engine has proved capable of slow idle as slow as 100 revolutions per minute. To drive off more fuel is supplied to the 4S cylinder and its VVT advances the opening of the exhaust valve in order to increase the turbocharger's output air pressure. At a switchover point, fuel is supplied to one of the 2S gas generating cylinders whose exhaust valve is also advanced using VVT. Power output is then increased by supplying fuel to the remaining 2S cylinder. As engine speed increases the VVT operation ceases and the MEP of all cylinders is kept the same as far as possible.

The switchover point from the starting/idling condition to the driving condition is simply determined by monitoring the amount of fuel provided to the 4S cylinder.

In a driving condition, fuel is supplied to all of the cylinders, both 2S and 4S.

It is a feature of this invention that the four stroke cylinders are not interchangeable with the two stroke cylinders. However, it is possible for the two stroke cylinders to be supplied with fuel once every two crankshaft revolutions so performing one working stroke every four piston strokes.

In this illustration the engine controller limits the maximum fuel quantity delivered to all cylinders to MEP values of about 6 bar when combustion takes place with about 100% excess air. This ensures the exhaust is NOx free, efficiency is very high, combustion is complete and no harmful substances such as Carbon Monoxide, soot or unburnt fuel are emitted from the car's exhaust. A car controlled in this way need not use a catalytic converter.

In some countries emission of NOx may be allowed when driving at higher speeds on motorways in open country. In such countries the controller can detect engine speed and gear position and allows fuel delivery to be increased towards maximum MEP.

A simplified numerical example can be used to illustrate this point. If the total swept volume of the four cylinder engine is 2 litres, because 1.5 litres operate as a 2S the engine can deliver the equivalent output of 3.5 litres 4S engine. If a 4S engine delivers 40kW per litre, the combination now has the capability of delivering 140kW at maximum MEP and 70kW below the NOx threshold with 100% excess air. A 4S engine of near identical size delivers 80kW with an average efficiency of 24% over a standard urban journey it requires 80/0.24=333kW of energy from the fuel compared with 70/0.45=155 kW required by the engine according to this invention with a predicted efficiency of 45%, more than halving the amount of fuel used and CO2 emitted.

So an engine according to this invention can deliver 70kW instead of 80kW, without a need for a catalytic converter to remove NOx , using less than half the amount of gasoline over an urban journey and occupying a similar space under the car bonnet.

Advantageously, the engine of the invention does not require fuel additives for lubrication as commonly required with two stroke engines.

Advantageously, the two stroke cylinders do not have inlet valves, which simplifies construction.

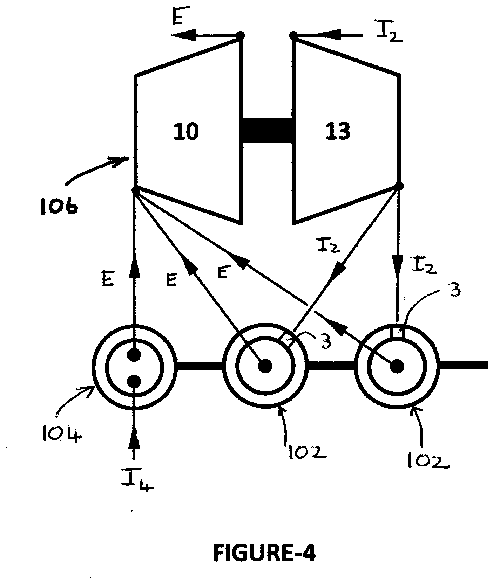

Figure-3 illustrates additional tools which can be used if needed to assist effective scavenge of 2S cylinder. Plenum chamber (20) can offer air capacity to smooth pressure fluctuations. Throttle valve (15) may be necessary if the use of a catalytic converter is required to remove NOx from the exhaust at high MEP. The method used to achieve this is described in the international patent publication number: WO2017/085440A1. A non- return valve (16), such as a reed valve may be necessary to stop the outflow of exhaust gas through the inlet ports (3) when the exhaust valve (5) opens. An auxiliary air inlet pipe operated by a valve (17) may be needed to assist starting by providing additional inlet air flow (indicated by arrow I' in Fig. 4) using an auxiliary air pump in some engine applications for example in a hybrid electric car. Items (14, 15, 16, 17 and 20) are not essential for the operation of the engine but may provide advantages in certain engine applications.

Fig. 3 also shows an alternative location and orientation for the fuel injector 8. To enable engine start, the fuel injector 8 of the 4S cylinder 104 is located in the near end of the combustion chamber 6 and orientated to deliver fuel spray towards the spark plug 9 at the far end of the combustion chamber 6, as indicated by the reference numeral 8A. This location and orientation enables the cylinder 104 to start the engine and idle at low speed. This is also a possible location and orientation for the injectors in the 2S cylinders.

However, for the 2S cylinders, the injector could be alternatively located and orientated to deliver fuel into the air jet emerging from the transfer orifice 7 as indicated by reference numeral 8B. In Fig. 3, the fuel injector 8B is directed towards the transfer orifice and delivers fuel into the transfer orifice 7 approximately in line with the air jet emerging from the transfer orifice 7.

The camshaft operating the exhaust valve (5) which is not shown will have two lobes, 180 degrees apart, and rotates at half engine speed in order to also cater for the four stroke cylinder or cylinders which are not shown. Selected cam lobes may be equipped with VVT devices in order to activate a cylinder as a gas generator if and when needed.

Figure-2 illustrates an example of a cylinder head 108 for a three cylinder Merritt Engine according to this invention in which one cylinder 104 is operating on a 4S cycle and is shown with two valves, exhaust valve (5) and inlet valve (21) and the remaining cylinders 102 operate on the 2S cycle and are shown with only one valve (5). The cylinders under the head are shown in broken line. Each of the combustion chambers (6) is shown as a tube inserted into the head and the fuel injector (8) and spark plug (9) are situated in cylindrical plugs inserted into the tube at both ends. The transfer orifice (7) is shown entering the combustion chamber tangentially. Fasteners 22 such as bolts or studs secure the cylinder head 108 to the cylinder block (not shown). The elevation view illustrates the simplicity of the design with the valve and combustion chamber cavities (6) situated side by side. The actual valves and camshaft arrangements are not shown since they are typical of many four stroke engines and well known to those skilled in the art.

Figure-4 illustrates how the cylinders of Figure-2 communicate with the turbocharger 106. All three cylinders feed their exhaust gas to the inlet of turbine (10) as indicated by arrows E, which exits the turbine 10 via duct 11. Inlet air is drawn via the air inlet 12 into the compressor/impellor 13 which delivers air only to the two 2S cylinder inlet ports, as indicated by arrows I₂. The 4S cylinder air intake is not connected with it as indicated by arrow I₄. Other arrangements may also connect the two and possibly use gas generating cylinders to boost the energy input to the turbocharger but the arrangement illustrated gives the 2S cylinders the maximum air output from the compressor.

Various other modifications may be made without departing from the scope of the invention. For example, the engine could comprise any suitable number combination of two and four stroke cylinders, as long as there is one of each. In one example, the engine could comprise a four cylinder engine fitted in a car in which one cylinder, the front cylinder is a 4S and the three other cylinders are 2S.

In one example, the inlet valve of the or one or each of the cylinders operating on the four stroke cycle could also receive air from the turbocharger compressor (13).

In one example, the engine of the invention could comprise two separate crankcases, one comprising cylinders operating on the four stroke cycle and another comprising cylinders operating on the two stroke cycle.

## Claims

1. A spark ignited internal combustion engine comprising a plurality of cylinders, the engine including, for each cylinder:
a combustion chamber (6) within the cylinder head, said chamber being spaced from its respective cylinder (102);
a transfer orifice (7) providing communication between the respective cylinder (102) and the combustion chamber (6);
a fuel injector (8) arranged to deliver, in use, liquid fuel spray into the chamber; a spark igniter (9) located within the combustion chamber;
the engine including:
a cylinder head to close each and all of the cylinders at one end;
an exhaust valve (5) for each cylinder located in the cylinder head, leading to an exhaust duct or exhaust manifold;
a piston (1) located in each cylinder for reciprocating movements therein;
**characterised in that**:
at least one cylinder (102) being made, in use, to operate on a two stroke cycle and at least one cylinder (104) being made to operate on a four stroke cycle;
the engine defining one or more air inlet ports for the or each of the two stroke cylinders, which permit air inflow into the cylinders when the respective piston reaches the end of its expansion stroke;
the engine including:
an air inlet valve for the or each of the four stroke cylinders situated in the cylinder head and communicating with such cylinders;
a device to activate all valves situated in the cylinder heads of all cylinders such as a cam shaft or a rotary valve;
a turbocharger including a compressor impeller (13) which communicates with the air inlet ports of the two stroke cylinders and a turbine (10) which communicates with the exhaust valve(s) of the four stroke cylinder(s);
wherein at least one cylinder of the engine which operates on the four stroke cycle supplies exhaust gas to the turbocharger turbine impeller (10) whose compressor impeller (13) supplies air to the air inlet ports of the or each of the two stroke cylinders.

2. An engine according to claim 1, wherein the exhaust valve of one or the or each of the cylinders operating on the two stroke cycle (102) also supplies exhaust gas to the turbocharger turbine (10).

3. An engine according to claims 1 or 2, in which the engine includes a controller to control at least the fuel injection process, the ignition process and the air intake and exhaust processes.

4. An engine according to claim 3 when dependent on claim 2, in which the controller moves the engine between a start/idling condition, in which fuel is provided only to the or each of the four stroke cylinders and the turbocharger turbine impeller is driven only by exhaust gas from the four stroke cylinder(s), and a driving condition, in which fuel is provided to all of the cylinders and the turbocharger turbine impeller is driven by exhaust gas from all of the cylinders.

5. An engine according to all preceding claims, wherein the inlet valve of the or one or each of the cylinders operating on the four stroke cycle also receives air from the turbocharger compressor (13).

6. An engine according to any of the preceding claims wherein the four stroke cylinders and two stroke cylinders share the same crankshaft (19).

7. An engine according to any of the preceding claims, wherein the four stroke and two stroke cylinders share the same cam shaft.

8. An engine according to any of claims 1 to 5, which comprises two separate crankcases one comprising cylinders operating on the four stroke cycle and another comprising cylinders operating on the two stroke cycle.

9. An engine according to any preceding claims, in which at least one cylinder is arranged to so operate as to increase the exhaust gas energy it delivers to the turbocharger turbine (10) by increasing the amount of fuel burnt therein or by advancing the timing of opening of the exhaust valve (5) of this cylinder or by a combination of both methods.

10. An engine according to any previous claim, wherein the exhaust valve driving mechanism is enabled to perform variable valve timing whilst the engine is operating.

11. An engine according to any of the preceding claims, in which the or each two stroke cylinder does not have an inlet valve.

12. An engine according to any of the preceding claims, in which the one or more air inlet ports for the or each of the two stroke cylinders are positioned to admit air into the respective cylinder when uncovered by the respective piston and are fully exposed open when the respective piston reaches the end of its expansion stroke.

13. An engine according to any of the preceding claims, in which each combustion chamber (6) has a near end and a far end relative to the cylinder, and the transfer orifice (7) is positioned to deliver a jet of air into the combustion chamber with a tangential velocity component during the compression stroke of the piston.

14. An engine according to any of the preceding claims, in which one or more of the two stroke cylinders only receives fuel once every two crankshaft revolutions.

15. An engine according to any of the preceding claims, in which the engine enables unthrottled operation.

## Patentansprüche

1. Funkengezündeter Verbrennungsmotor, der eine Vielzahl von Zylindern umfasst, wobei der Motor für jeden Zylinder einschließt:
Eine Verbrennungskammer (6) innerhalb des Zylinderkopfes, wobei die Kammer von ihrem jeweiligen Zylinder (102) beabstandet ist;
eine Überströmöffnung (7), die Kommunikation zwischen dem jeweiligen Zylinder (102) und der Verbrennungskammer (6) bereitstellt;
Eine Einspritzdüse (8), die eingerichtet ist, in Gebrauch, flüssigen Kraftstoffnebel in die Kammer zu liefern;
einen Funkenzünder (9), der sich innerhalb der Verbrennungskammer befindet;
der Motor einschließt:
Einen Zylinderkopf, um jeden oder alle der Zylinder an einem Ende abzuschließen;
ein Auslassventil (5) für jeden Zylinder, das sich im Zylinderkopf befindet und zu einem Auslasskanal oder Auspuffkrümmer führt;
einen Kolben (1), der sich in jedem Zylinder befindet, um hin- und hergehenden Bewegungen darin auszuführen;
**dadurch gekennzeichnet, dass**:
Zumindest ein Zylinder (102), in Gebrauch, veranlasst wird, mit einem Zweitaktzyklus zu arbeiten und zumindest ein Zylinder (104) veranlasst wird mit einem Viertaktzyklus zu arbeiten;
wobei der Motor einen oder mehrere Lufteinlassöffnungen für den oder jeden der Zweitaktzylinder definiert, welche Luftströmung in die Zylinder zulassen, wenn der jeweilige Kolben das Ende seines Expansionshubes erreicht;
der Motor einschließt:
Ein Lufteinlassventil für den oder jeden der Viertaktzylinder, das sich im Zylinderkopf befindet und mit derartigen Zylindern kommuniziert;
eine Vorrichtung zum Aktivieren aller Ventile, die sich in den Zylinderköpfen aller Zylinder befinden wie beispielsweise eine Nockenwelle oder ein Drehventil;
einen Turbolader, der ein Kompressorlaufrad (13), das mit den Lufteinlassöffnungen der Zweitaktzylinder kommuniziert und eine Turbine (10) einschließt, die mit dem/den Auslassventil(en) des/der Viertaktzylinders -zylinder kommuniziert;
wobei zumindest ein Zylinder des Motors, der mit dem Viertaktzyklus arbeitet, Abgas zum Turbolader-Turbinenlaufrad (10) liefert, dessen Kompressorlaufrad (13) Luft zu den Lufteinlassöffnungen des oder jedes der Zweitaktzylinder liefert.

2. Motor nach Anspruch 1, wobei das Auslassventil eines oder des oder jedes der Zylinder, das mit dem Zweitaktzyklus (102) arbeitet, außerdem Abgas zur Turboladerturbine (10) liefert.

3. Motor nach Ansprüchen 1 oder 2, bei dem der Motor eine Steuereinheit einschließt, um zumindest den Kraftstoffeinspritzprozess, den Zündprozess und die Lufteinlass- und Abgasprozesse zu steuern.

4. Motor nach Anspruch 3, wenn von Anspruch 2 abhängig, bei dem die Steuereinheit den Motor zwischen einem Start-/Leerlaufzustand, bei dem Kraftstoff nur dem oder jedem der Viertaktzylinder bereitgestellt wird und das Turbolader-Turbinenlaufrad nur durch Abgas vom/von den Viertaktzylinder(n) angetrieben wird, und einem Antriebszustand bewegt wird, bei dem Kraftstoff allen der Zylinder bereitgestellt wird und das Turbolader-Turbinenlaufrad vom Abgas aller der Zylinder angetrieben wird.

5. Motor nach allen vorhergehenden Ansprüchen, wobei das Einlassventil des oder eines oder jedes der Zylinder, das mit dem Viertaktzyklus arbeitet, außerdem Luft vom Turboladerkompressor (13) empfängt.

6. Motor nach irgendeinem der vorhergehenden Ansprüche, wobei sich die Viertaktzylinder und Zweitaktzylinder die gleiche Kurbelwelle (19) teilen.

7. Motor nach irgendeinem der vorhergehenden Ansprüche, wobei sich die Viertakt- und Zweitaktzylinder die gleiche Nockenwelle teilen.

8. Motor nach irgendeinem der Ansprüche 1 bis 5, der zwei separate Kurbelgehäuse umfasst, wovon eins Zylinder umfasst, die mit dem Viertaktzyklus arbeiten und das andere Zylinder umfasst, die mit dem Zweitaktzyklus arbeiten.

9. Motor nach irgendeinem der vorhergehenden Ansprüche, bei dem zumindest ein Zylinder eingerichtet ist, so zu arbeiten, dass die von ihm zur Turboladerturbine (10) gelieferte Abgasenergie durch Erhöhen der darin verbrannten Kraftstoffmenge oder durch Vorverlegen des Zeitpunkts des Öffnens des Auslassventils (5) dieses Zylinders oder durch eine Kombination beider Methoden erhöht wird.

10. Motor nach irgendeinem vorhergehenden Anspruch, wobei der Antriebsmechanismus für das Auslassventil fähig ist, variable Ventilsteuerung bei laufendem Motor durchzuführen.

11. Motor nach irgendeinem der vorhergehenden Ansprüche, bei dem der oder jeder Zweitaktzylinder kein Einlassventil hat.

12. Motor nach irgendeinem der vorhergehenden Ansprüche, bei dem die eine oder mehrere Lufteinlassöffnungen für den oder jeden der Zweitaktzylinder positioniert sind, Luft in den jeweiligen Zylinder, wenn vom jeweiligen Kolben freigelegt, einzulassen und völlig offen exponiert sind, wenn der jeweilige Kolben das Ende seines Expansionshubes erreicht.

13. Motor nach irgendeinem der vorhergehenden Ansprüche, bei dem jede Verbrennungskammer (6) ein nahes Ende und ein fernes Ende relativ zum Zylinder aufweist, und die Überströmöffnung (7) positioniert ist, während des Kompressionshubes des Kolbens, einen Luftstrahl mit einer tangentialen Geschwindigkeitskomponente in die Verbrennungskammer zu liefern.

14. Motor nach irgendeinem der vorhergehenden Ansprüche, bei dem einer oder mehrere der Zweitaktzylinder nur alle zwei Umdrehungen der Kurbelwelle Kraftstoff empfängt.

15. Motor nach irgendeinem der vorhergehenden Ansprüche, bei dem der Motor ungedrosselten Betrieb ermöglicht.

## Revendications

1. Moteur à combustion interne à allumage par étincelles comprenant une pluralité de cylindres, le moteur incluant, pour chaque cylindre :
une chambre de combustion (6) dans la culasse, ladite chambre étant à distance de son cylindre respectif (102) ;
un orifice de transfert (7) fournissant une communication entre le cylindre respectif (102) et la chambre de combustion (6) ;
un injecteur de carburant (8) agencé pour amener, lors de l'utilisation, une pulvérisation de carburant liquide dans la chambre ;
un dispositif d'allumage par étincelle (9) situé dans la chambre de combustion ;
le moteur incluant :
une culasse pour fermer tous les cylindres à une extrémité ;
une soupape d'échappement (5) pour chaque cylindre situé dans la culasse, menant à un tuyau d'échappement ou une tubulure d'échappement ;
un piston (1) situé dans chaque cylindre pour des mouvements de va-et-vient dans ce dernier ;
**caractérisé en ce que** :
au moins un cylindre (102) est conçu, lors de l'utilisation, pour fonctionner sur un cycle à deux temps et au moins un cylindre (104) est conçu pour fonctionner sur un cycle à quatre temps ;
le moteur définit un ou plusieurs orifices d'admission d'air pour le ou les cylindres à deux temps, ce qui permet une entrée d'air dans les cylindres quand le piston respectif atteint la fin de sa course de détente ;
le moteur incluant :
une soupape d'admission d'air pour le ou les cylindres à quatre temps situés dans la culasse et communiquant avec lesdits cylindres ;
un dispositif pour actionner toutes les soupapes situées dans les culasses de tous les cylindres, tel qu'un arbre à cames ou une soupape rotative ;
un turbocompresseur incluant un rotor de compresseur (13) qui communique avec les orifices d'admission d'air des cylindres à deux temps et une turbine (10) qui communique avec la ou les soupape(s) d'échappement du ou des cylindre(s) à quatre temps ;
où au moins un cylindre du moteur qui fonctionne sur le cycle à quatre temps fournit un gaz d'échappement au rotor de turbine de turbocompresseur (10) dont le rotor de compresseur (13) fournit de l'air aux orifices d'admission d'air pour le ou les cylindres à deux temps.

2. Moteur selon la revendication 1, où la soupape d'échappement d'un ou plusieurs cylindres fonctionnant sur le cycle à deux temps (102) fournit aussi le gaz d'échappement à la turbine de turbocompresseur (10).

3. Moteur selon la revendication 1 ou 2, dans lequel le moteur inclut un dispositif de commande pour commander au moins le processus d'injection de carburant, le processus d'allumage et les processus d'admission d'air et d'échappement.

4. Moteur selon la revendication 3 en fonction de la revendication 2, dans lequel le dispositif de commande déplace le moteur entre une condition de démarrage/ralenti, dans lequel un carburant est fourni seulement au ou aux cylindres à quatre temps et le rotor de turbine de turbocompresseur est entraîné seulement par le gaz d'échappement venant du ou des cylindre(s) à quatre temps et une condition d'entraînement, où le carburant est fourni à tous les cylindres et le rotor de turbine de turbocompresseur est entraîné par le gaz d'échappement venant de tous les cylindres.

5. Moteur selon toutes les revendications précédentes, où la soupape d'admission du ou des cylindres fonctionnant sur le cycle à quatre temps reçoit aussi de l'air du compresseur de turbocompresseur (13).

6. Moteur selon l'une quelconque des revendications précédentes où les cylindres à quatre temps et les cylindres à deux temps partagent le même vilebrequin (19).

7. Moteur selon l'une quelconque des revendications précédentes, où les cylindres à deux temps et à quatre temps partagent le même arbre à cames.

8. Moteur selon l'une quelconque des revendications 1 à 5, lequel comprend deux carters distincts, un comprenant des cylindres fonctionnant sur le cycle à quatre temps et un autre comprenant des cylindres fonctionnant sur le cycle à deux temps.

9. Moteur selon l'une quelconque des revendications précédentes, dans lequel au moins un cylindre est agencé pour fonctionner de façon à augmenter l'énergie du gaz d'échappement qu'il envoie à la turbine de turbocompresseur (10) en augmentant la quantité de carburant qui y est brûlé ou en avançant le moment d'ouverture de la soupape d'échappement (5) de ce cylindre ou par une combinaison des deux procédés.

10. Moteur selon l'une quelconque des revendications précédentes, où le mécanisme d'entraînement de soupape d'échappement est actionné pour effectuer un calage de soupape variable pendant que le moteur fonctionne.

11. Moteur selon l'une quelconque des revendications précédentes, dans lequel le ou les cylindres à deux temps n'ont pas de soupape d'admission.

12. Moteur selon l'une quelconque des revendications précédentes, dans lequel le ou les orifices d'admission d'air pour le ou les cylindres à deux temps sont positionnés pour admettre de l'air dans le cylindre respectif lorsqu'ils ne sont pas couverts par le piston respectif et sont complètement exposés ouverts quand le piston respectif atteint la fin de sa course de détente.

13. Moteur selon l'une quelconque des revendications précédentes, dans lequel chaque chambre de combustion (6) a une extrémité proche et une extrémité éloignée par rapport au cylindre, et l'orifice de transfert (7) est positionné pour amener un jet d'air dans la chambre de combustion avec un composant de vitesse tangentielle pendant la course de compression du piston.

14. Moteur selon l'une quelconque des revendications précédentes, dans lequel un ou plusieurs cylindres à deux temps reçoivent du carburant seulement tous les deux tours de vilebrequin.

15. Moteur selon l'une quelconque des revendications précédentes, dans lequel le moteur permet le fonctionnement sans étranglement.
